# EUROPEAN PATENT SPECIFICATION

(11) **EP 0 562 425 B1**
(45) Date of publication and mention of the grant of the patent: **29.09.1999**
(21) Application number: 93104301.2
(22) Date of filing: 16.03.1993
(51) Int. Cl.: G01N 35/00

(54) **Method of assaying samples using analysis slides**
Testverfahren für Proben unter Verwendung flacher Probenträger
Méthode pour analyser des échantillons en utilisant de lames d'analyse

(30) Priority: 19.03.1992 JP 6360592
(43) Date of publication of application: 29.09.1993
(73) Proprietor: Fuji Photo Film Co., Ltd., Kanagawa-ken (JP)
(72) Inventor: Saito, Yoshio, c/o Fuji Photo Film Co., Ltd., Asaka-shi, Saitama-ken (JP); Hirai, Kikuo, c/o Fuji Photo Film Co., Ltd., Asaka-shi, Saitama-ken (JP); Yanagawa, Tatsuya, c/o Fuji Photo Equipment Co.Ltd, Kanagawa-ken (JP)
(74) Representative: Kraus, Walter, Dr.

(56) References cited:
- EP-A- 0 353 589
- EP-A- 0 376 109
- EP-A- 0 383 322

## Description

The invention relates to a method of assaying samples by using analysis films included in a plurality of slide packages, in which each of said analysis films has at least one layer containing reagent for assaying a predetermined analyte, comprising the following method steps:
(a) recording on a magnetic card information required for a curve corresponding to an analysis slide having a particular analysis film;
(b) reading magnetically said information recorded on said magnetic card before or during assaying the analysis film included in the slide package;
(c) producing a lot-specific standard curve corresponding to the lot-specifity of the analysis films by using said information read;
(d) performing a calculation to obtain the concentration or activity of said analyte.

Furthermore, the invention relates to the use of magnetic cards in carrying out said method, each said card being included in a respective one of a plurality of slide packages having analysis films, said magnetic cards having recorded thereon magnetically readable information required for a curve corresponding to an analysis slide having a particular analysis film.

More generally, the invention relates to an assay system for an analysis system and more particularly, to an assay assisting system for an analysis slide, which can be suitably used to set up a standard curve (or standard calibration curve, or standard calculating curve), and to correct the standard curve by using lot-specific (or lot-dependent) information for an analysis slide to precisely analyze liquid samples such as blood samples.

### Description of the Related Art

There are two main types of chemical analysis methods which are employed to assay (determine) the presence of a specific component, its content (its concentration or activity) or the like in a liquid sample such as a blood sample, that is, a dry type and a wet type. The dry-type method uses analysis slides each containing an analysis film (also called an analysis element or an analysis device unit) which has at least one reagent layer containing a specific reagent. A sample liquid is spotted (or dropped) onto an analysis slide, which is then placed in a reaction incubator to allow the reaction to progress. A reaction rate or a result of the reaction is detected and determined; for example, an optical density change of a color is determined by an optical densitometer. The dry-type analysis method is convenient because liquid samples can be handled like solid samples. Further, the assaying apparatus required for operating this method is normally small and easy to handle and operate. Therefore, the dry-type method is very widely employed.

In general, an apparatus used for the dry-type analysis method has a floppy disk (FD) or a ROM storing information necessary for photometry of colored analysis slides, calculation and display of results, for example: the standard curve; data processing methods such as an end point assay method and a rate assay method; an assaying time length; an amount of a sample to be spotted onto a slide; units for displaying results; and a range of values to be displayed. Thus, the apparatus performs various types of processing predetermined specifically for individual analytes (components to be determined) in accordance with the stored information. However, since such information regarding various analytes is stored as one unit in an FD or ROM, the FD or ROM usually needs to be changed if the type of slides used for analysis is changed (more specifically, if the composition of the reagent, the layer arrangement of the analysis films, the materials constituting the layers, or the like is changed, thus changing determination methods, calculation methods, display methods or the like), or if a newly developed slide introducing a new analyte is used for assay.

The inconvenience of changing FDs or ROMs can be eliminated if an assay system is constructed so that the necessary information can be inputted for each assaying process. Japanese Unexamined Patent Publication (Kokai) No. 59(1984)-10850 discloses such an assay system in which coded information necessary for assay, for example, information regarding analytes, wave lengths used for photometry, incubation time lengths and standard curves, is printed on a member supporting a test strip.

However, since this system performs determination with reference to a standard curve obtained by using a standard optical density plate, the system may provide different measured values for different lots of the same kind of analysis slides. This is because the characteristics of different lots of the same type of analysis films of analysis slides vary in some cases even if the films have been produced under predetermined and controlled conditions.

To eliminate this problem, Japanese Unexamined Patent Publication No. 3(1991)-29838 proposes a system in which information regarding analysis films of each lot, such as coefficients of the standard curve thereof, which information is obtained beforehand, is provided on each casing of a kind of slide containing an analysis film of the lot, in a human readable form (i.e., alphabetical characters and numerals), information so that an operator can input the information to the assaying apparatus through a key board.

Japanese Unexamined Patent Publication 2(1990)-257065 (corresponding to EP 0 353 589A) proposes another method for correcting fluctuations of measured or calculated values caused by possible lot-specific (lot-dependent) variations of characteristics of analysis slides. In this method, lot-specific fluctuations of measured or calculated values is corrected by using: reaction cartridges (one type of analysis slide) each carrying information, such as the lot identification number and the name of the specific analyte, expressed in human readable symbols (e.g., alphabetical characters and numerals) and optical codes (bar codes); and cards each carrying information, such as information for correcting lot-specific variations of characteristics of an analysis reagent contained in each reaction cartridge, the lot identification number and the name of the specific analyte. This Japanese Unexamined Patent Publication does not specifically describe a method for calibrating a standard curve by using lot-specific correction data, but only states that a known method can be employed for this purpose. Because the reaction cartridges (one type of analysis slide) used in this method are provided with the corresponding lot numbers by means of, for example, printing, the production cost of the reaction cartridges is inevitably increased. Further, this method is not very suitable for an analysis slide containing a highly sensitive analysis reagent. When lot numbers or the like are printed or heat-transferred onto an assembled analysis slide, the highly sensitive analysis reagent contained therein may be adversely affected (deteriorated or changed in characteristics) by a volatile solvent contained in the printing ink or heat provided during transference.

However, information which can be provided on a member supporting a test strip is limited to a rather small amount. Therefore, even the above system needs a ROM or floppy disk to store information having a large amount of data, such as information regarding complicated data processing methods. Then, the ROM or FD must be replaced with another ROM or FD in order to make such change. Significant inconvenience is incurred, such as packing, to safely and unfailingly deliver ROMs or FDs having necessary information to users throughout the country or the world. Further, some user may find it difficult to install the ROMs or FDs they receive. In principle, this kind of apparatus should be easy to handle and operate.

The amount of information required is further increased by a growing demand for enhancement of assay precision, as follows. If an equation of fourth degree is used to obtain a standard curve, then five coefficients are required If correction of such a standard curve is performed by using a function of second degree, three coefficients are required. Since analytic curves are obtained from equations of fourth or fifth degree, five or six coefficients are required. Further, assay of some analytes require conversion of a measured value of optical density to an intermediate value and/or correction of coefficients for color fading.

Further, the amount of necessary information may be increased by a demand for selective display in the conventional units and SI units. Still further, if an assaying apparatus handles analysis slides requiring greatly different processing methods, the amount of information necessary to select the processing methods proportionally increases.

The amount of information is further increased by various options. For example, a usable period (shelf life period) of analysis slides is optionally determined beforehand and an alarm signal is generated when a slide older than the predetermined usable period is detected. Further, if production dates of slides are available or detectable and a coefficient for compensation for aging deterioration of characteristics of the slides is known, appropriate compensation can be made by using the number of days after the production and the compensation coefficient for aging deterioration. Still further, a threshold for determining an abnormal value outside the predetermined value range of each analyte may be stored.

Some of the above-mentioned information varies from one lot to another. If ROMs and/or FDs are used to make such variation, they must be frequently changed, causing substantial inconvenience to users. Further, the amount of information to be changed is large, it is difficult to make an optically readable code of the information and print the coded information on slides or the like, and further, a normal magnetic code will fail due to memory shortage of magnetic accommodation capacity.

A method of assaying samples by using analysis films and the use of flat strips as magnetic cards of the type mentioned in the beginning are known from EP-A-376 109. The system disclosed in this document includes an analyzer, a test carrier and a code carrier in the form of a flat strip. The analyzer includes a code reader which reads magnetic codes recorded on the code carrier and has a magnetic-resistive element as a reading header. However, according to EP-A-376 109 the lot-specific standard curve is directly read from the magnetic card, i.e. the exact curve for the measurement with the respective analysis slide.

### SUMMARY OF THE INVENTION

An object of the present invention is to provide a method which more advantageously performs assay using analysis slides in accordance with information about the assay stored in a magnetic card, the information including lot-specific (lot-dependent) information provided for each lot of slides.

This object is solved by a method of the type mentioned in the beginning which is characterized in that said information on said magnetic card comprises the following two types of information:
(1) fixed information including coefficients for completing a basic standard curve corresponding to an analysis slide having said particular analysis film; and
(2) variable information required for correcting a deviation in a measurement which is caused by the possible lot-specific variation of characteristics of analysis films differing from one lot to another lot;
and said production of a lot-specific standard curve comprises the following method steps:
(A) completing a basic standard curve by using said fixed information; and
(B) producing said lot-specific standard curve from said basic standard curve by using said variable information;
a magnetic card being included in each slide package and said method step of reading being performed for every slide package.

Furthermore, the invention provides, as mentioned in the beginning, the use of a magnetic card in carrying out the above method, wherein said information on said magnetic card comprises the following two types of information:
(1) fixed information including coefficients for completing a basic standard curve corresponding to an analysis slide having said particular analysis film; and
(2) variable information required for correcting a deviation in a measurement which is caused by the possible lot-specific variation of characteristics of analysis films differing from one lot to another lot;
and each of said magnetic cards is used for the slide package in which it is included in order to read the whole of the information or a part of the information including said variable information before or during assaying samples by using the analysis film within the slide package.

The method and use of the invention can be practiced in an assay system for analysis slides comprising: magnetic card reading means for reading the whole or a part of the information recorded on a magnetic card in such a manner that the information can be magnetically read, the information being information required for assay of a predetermined analyte, including fixed information including coefficients for completing a basic standard curve corresponding to an analysis slide having an analysis film which has a layer containing at least one reagent for assaying (determining) the value of the amount or the activity of an analyte, and variable information required for correcting a deviation in a measured value which is caused by the possible variation of characteristics of analysis films differing from one lot to another lot; and an assaying apparatus which, in accordance with information read by the magnetic card reading device, produces a standard curve corresponding to the lot of the analysis films represented by the magnetic card, by using the basic standard curve and other information belonging to the information read by the magnetic card reading device, performs calculation to obtain the amount (concentration) or activity of the analyte, and displays results of assay (i.e., calculating).

The use of the magnetic card according to the invention can be practiced within the frame of a correction method other than the above-described method in which the coefficients of a basic standard curve expressed by an expression of a high degree is calibrated by using lot-specific correction data so as to obtain a lot-specific standard curve. For example, a basic standard curve is used without being calibrated by lot-specific correction data in order to calculate the amount (concentration) or activity of a specific analyte, then the calculated values of the amount (concentration) or activity are corrected by multiplying those values by correction coefficients obtained from lot-specific correction data through correction functions of a degree lower than the degree of the expression of the basic standard curve.

The method and use according to the present invention will be described hereinafter based on a correction method in which the coefficients of a basic standard curve are calibrated by lot-specific correction data. However, the use of the magnetic card in accordance with the invention can also be practiced on the basis of other correction methods, for example, a method which corrects correction functions for providing correction coefficients, instead of calibrating a basic standard curve.

Further, the method and use of the present invention can be practiced with an assaying apparatus, which uses an analysis slide having an analysis film which has at least one layer containing a reagent for assaying (determining) a predetermined analyte, and calculates the amount (concentration) or activity of the predetermined analyte in accordance with a stored computer program in which a predetermined photometry and calculation processing method is written, comprising: storage means for reading fixed information including a basic standard curve corresponding to the analysis film of an analysis slide and/or variable information from a magnetic card as described below by using a magnetic card reading device which is provided either inside or outside the assaying apparatus; and a basic processing computer program written so-as to complete the computer program regarding the photometry and calculation processing method for producing a lot-specific standard curve corresponding to the lot of the analysis film by using the basic standard curve and performing calculation to obtain the amount (concentration) or activity of the analyte by using the standard curve in accordance with the fixed information and the variable information stored in the storage means. The above-mentioned magnetic card carries information recorded on the magnetic card in such a manner that the information can be magnetically read in, the information being information being information required for assay of a predetermined analyte, including: fixed information including coefficients for completing a basic standard curve corresponding to the analysis slide having an analysis film which has a layer containing at least one reagent for assaying the analyte; and variable information required for correcting a deviation in a measured value which is caused by the possible lot-specific variation of characteristics of analysis films differing from one lot to another lot,

According to the present invention, because information is coded for storage, an increased amount of information can be stored. Further, numerical information is packed (e.g., a number is packed into 4-bit data) when stored into the magnetic card, thus achieving increased storage density.

The stored information is read by the magnetic card reader and then inputted a memory (RAM) in accordance with programs stored in a floppy disk of the assaying apparatus. The magnetic card reader may be provided either separately from the apparatus or inside the apparatus. Photometry, calculation and data display are performed in accordance with the information inputted in accordance with the programs.

Each slide package contains one magnetic card, which is read by using the magnetic card reader when the slide package is opened. Thus, the magnetic cards facilitate operation and eliminate mistakes, thus achieving user friendliness.

Further objects, features and advantages of the present invention will become apparent from the following description of the invention with reference to the attached drawings.

### BRIEF DESCRIPTION OF THE DRAWINGS

Fig. 1 is a general view of a preferred embodiment of an assaying apparatus (analyzer) with which the method and use of the invention can be practiced;
Fig. 2 illustrates a preferred embodiment of the magnetic card usable in the invention;
Figs. 3(A) and 3(B) illustrate a preferred embodiment of the analysis slide usable in the invention;
Fig. 4 is a block diagram of a control system of a preferred embodiment of the assaying apparatus (analyzer) with with the method and use of the invention can be practiced.

### DESCRIPTION OF THE PREFERRED EMBODIMENTS

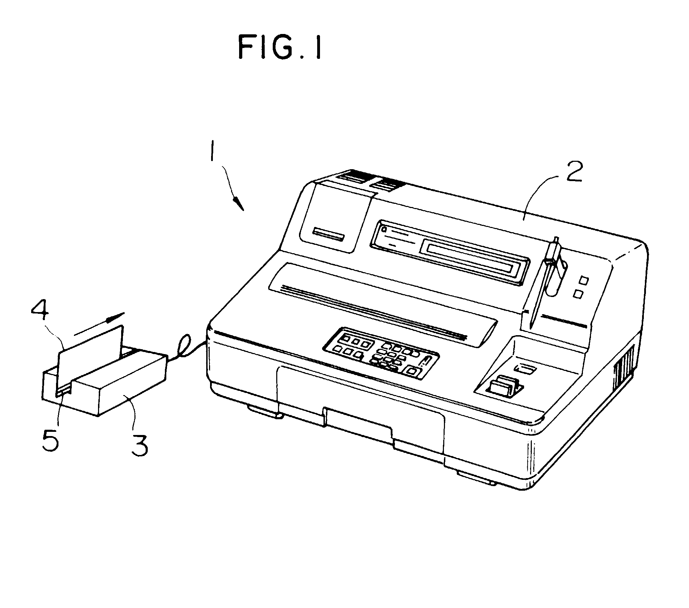

The preferred embodiments of the present invention will be described hereinafter with reference to Figs. 1 to 4.

As shown in Fig. 1, an assay system according to the present invention comprises an assaying apparatus (analyzer) 2 and a magnetic card reader 3.

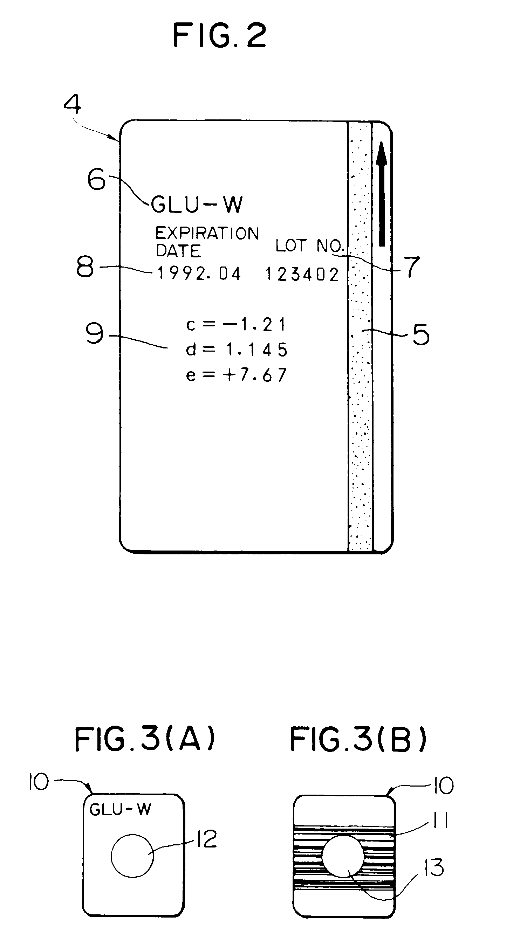

As shown in Fig. 2, a magnetic card 4 is about as large as a prepaid telephone card. The magnetic card 4 has a magnetic code recorded by a specific magnetic code recorder (not shown).

The magnetic card 4 stores two kinds of information: fixed information including coefficients for completing a basic standard curve corresponding to an analysis slide containing an analysis film which has at least one layer containing a reagent for a predetermined analyte; and variable information used to compensate fluctuation of photometric or calculated values caused by the possible variation of characteristics of analysis films which differ from one lot to another. The "fixed information" is invariable and basic information including: the code of a predetermined analyte; the name of the analyte, the amount of a liquid sample to be spotted (dropped) onto the analysis slide; a wave length used to measure the optical density of a color present in the analysis slide; a process for calculating data based on the optical density measured; a basic standard curve; a predetermined value range; a display range; the number of digits to be displayed; and the units for display. The "variable information" is information which may be varied, including: a lot number used for correction (or compensation) of fluctuation of measured or calculated values caused by the possible lot-specific variation in characteristics of analysis films which differ from one lot to another; and a correction coefficient of the standard curve predetermined for each lot. The variable information may further include a production date and a usable period (the expiration date of the contained reagent). The fixed information does not mean information which is absolutely fixed but information which does not need to be changed for every lot. Further, the fixed information is not limited to the above-listed types of information but can be suitably defined when an assay program is written.

The magnetic card issuer normally uses ASCII computer code to write information in the magnetic card 4, and it encodes or packs (e.g., pack a number into 4-digit data) numerical information in order to increase storage density. The magnetic card 4 may be made of either plastic or paper as long as it has a magnetic portion 5 for recording magnetic information. A surface of the magnetic card 4 may carry printed identification information, such as the name of a predetermined analyte 6, the lot number 7, the usable period 8 and correction coefficients 9. If such information is thus provided, the information can be visually confirmed.

A magnetic card 4 storing the above-mentioned information is provided for a package of analysis slides, and the information is stored in the as assaying apparatus 2 by using the magnetic card reader 3 as a peripheral device, before assaying operation using analysis slides (Fig. 1) . The magnetic card reader 3 may also be provided inside the assaying apparatus 2.

The assaying apparatus 2 has a floppy disk driver (not shown) and a RAM, and thus can read the basic processing program for assaying process stored in a floppy disk and store it in the RAM. The basic processing program is written so as to read fixed information including coefficients for completing a basic standard curve corresponding to the analysis film of an analysis slide and/or lot-specific variable information, which may differ from one lot to another, from a magnetic card and to store it in storage means provided inside the assaying apparatus 2. Further, the basic processing program completes a computer program regarding a photometry and calculation processing to produce a lot-specific standard curve corresponding to the lot of the analysis films by using the basic standard curve and other information belonging to the fixed or variable information stored in the storage means and to calculate the amount (concentration) or activity of a predetermined analyte by using the standard curve. The basic processing program may be either stored in a RAM by reading it from a floppy disk using the floppy disk drive provided in the assaying apparatus, or stored in a ROM provided in the assaying apparatus. The fixed information and the variable information subsequently read from another magnetic card is stored in a floppy disk. If it is found that the slides are from the same lot as the previous slides, assaying process can be performed without reading the information of the magnetic card from the floppy disk to the RAM. Because one slide package contains slides of the same lot, reading of the magnetic card is required only once when the container is opened, and further reading of the magnetic card is unnecessary as long as the slides from the same container are processed.

Figs. 3(A) and 3(B) illustrate the front and back sides, respectively, of an analysis slide 10. The back side of the analysis slide 10 carries a bar code 11 indicating the analyte of the analysis slide 10. When the analysis slide 10 is put in the assaying apparatus 2, the bar code 11 is read by an optical sensor (a bar code reader) which is provided near conveying mean for conveying analysis slides from a slide loading site to a sample spotting site, thus identifying the analyte of the analysis slide 10. Then, photometry is performed for the analysis slide 10 and, then, the obtained data (value of the optical density) is processed and calculated, in accordance with the computer program regarding the photometry and calculation processing, which program has been written using the fixed information and the variable information read in from the magnetic card corresponding to the analysis slide 10. Instead the bar code 11, the analysis slide 10 may carry a carura code (one type of optical code which can express a hexadecimal code) or a magnetic code.

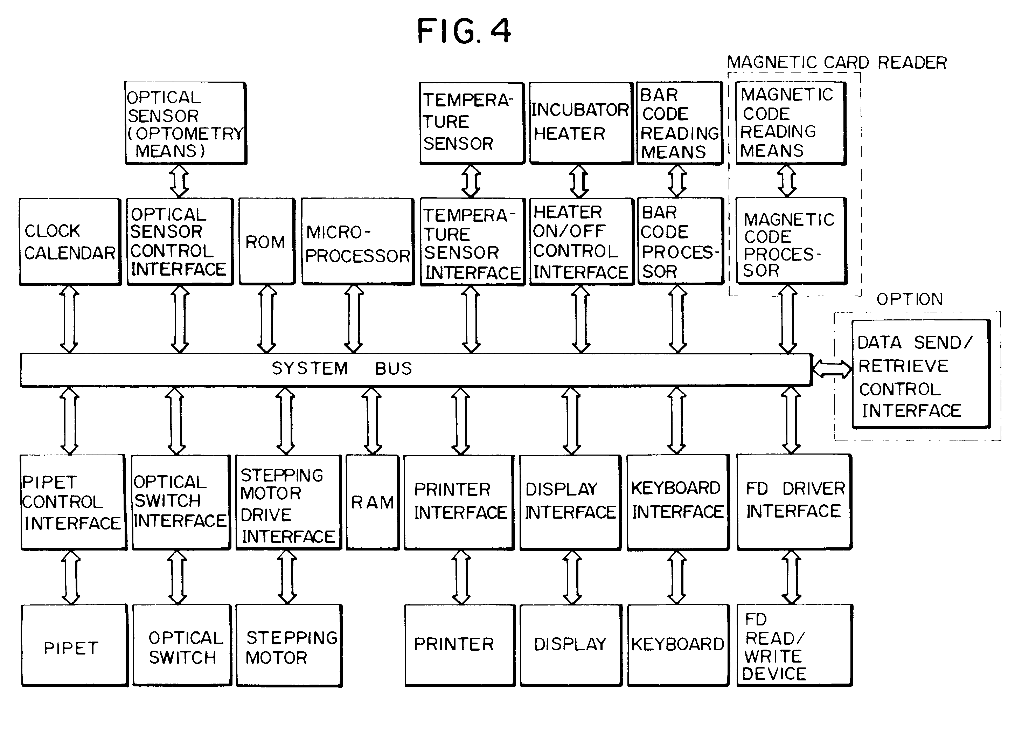

Fig. 4 is a block diagram of a control system of a preferred embodiment of the assaying apparatus equipped with the assay system of the present invention. To read in magnetic information of a magnetic card into an assaying apparatus by using a magnetic card reader, the magnetic card key of the key board of the assaying apparatus is pressed, and then the magnetic card is slid through the magnetic card reader. The fixed information and/or variable information read from the magnetic card is stored in a floppy disk and/or the RAM. A lot-specific standard curve corresponding to the analyte is obtained by using the basic standard curve and the values of coefficients contained in the fixed and variable information. Then, the optical density of the analysis slide is measured and calculated to obtain the amount (concentration) or activity of the analyte, by using the lot-specific standard curve.

The analysis operation using the assay system for analysis slides, the assaying apparatus and the magnetic card of the present invention will be described hereinafter. An analysis slide set in the assaying apparatus is conveyed, by conveying means driven by a stepping motor, to a sample-spotting site, and then into an incubator where the predetermined substantially constant temperature is maintained. During conveyance, a bar code reader provided in the assaying apparatus reads the bar code printed on the analysis slide, thus identifying the analyte. Then, the sample is spotted onto an analysis slide by using a pipet. While the analysis slide is held in the incubator, the optical density of the analysis slide (analysis film) is measured by photometry means using an optical sensor a predetermined time after spotting of the sample liquid. The obtained optical density is processed (calculated) to obtain the amount (concentration) or activity of the analyte, in accordance with the data processing corresponding to the analyte. This data processing (e.g., calculation and correction) is performed by using information read from the magnetic card. The amount (concentration) or activity of the analyte is outputted to a display and a printer. Optionally, the amount (concentration) and activity of the analyte and, if desired, the optical density thereof can be sent out through a send/receive control interface.

Although the information of the magnetic card is read before assay operation of the corresponding analysis slides in normal operation, it can be read in during the assay operation if an analysis slide of a different lot is used. In such a case, an interruption time of photometry and data processing must be minimum so as to reduce adverse effects on the photometry and data processing to minimum. This can be achieved by providing an identification number for each set of fixed information and writing a basic computer program so that the identification number of the set of fixed information read in from the current magnetic card is compared with the identification number of the set of the fixed information read in from the previous magnetic card and, if the identification numbers are the same, only the variable information of the current magnetic card is read in and stored. Further, a basic computer program may be written so that, if there is a large amount of variable information to be read in, reading of the variable information is prohibited during an assaying process. Still further, a floppy disk containing fixed information may be used, and only variable information is read in from magnetic cards as long as no fixed information different from the fixed information stored in the FD is found. Further, inappropriate correction can be prevented, for example, if the bar code of each analysis slide contains a number identifying the kind of the variable information and when a number different from the number previously read in and stored is found, an alarm signal is produced.

The fixed information including: the amount of a sample to be spotted, the wave length for photometry, the method of data processing (that is, processing and/or calculating of the obtained optical density data), a basic standard curve, a range of the amount or activity of an analyte; a display range, the number of digits to be displayed, and display units, is not frequently changed in normal operation. This information can be read in and stored just by sliding a magnetic card through the magnetic card reader, even if there is a change in fixed information.

If the storability of analysis slides is poor, periodical calibration is required. Correction can be made by calibration using a basic standard curve as a standard calibration curve. The fixed information of a magnetic card may include a set of information determining whether or not calibration is required.

The assay system for analysis slides and the assaying apparatus of the present invention can handle not only dry-type analysis slides having dry-type analysis films or test strips but also packs containing wet-type reagents (i.e., solutions of reagents). Further, although the above-described embodiments employ colorimetry method, the assay system and the assaying apparatus of the present invention can employ various electrochemical sensors (e.g., ion-selective electrodes and FET sensors), various electro-biochemical sensors, photoelectric sensors, photo-electrochemical sensors, etc.

As described above, in the assay system of the present invention, the fixed information and lot-specific variable information which may differ from one lot to another is stored in magnetic cards, and each slide package contains such a magnetic card, and the information is read in by the magnetic card reader. Therefore, to operate the system, a user (an operator) does not need to worry about a change in the fixed and variable information. Instead, the system responds to such a change when reading fixed and variable information. Thus, the assay system for analysis slides and the assaying apparatus of the present invention are easy to operate.

## Claims

1. A method of assaying samples by using analysis films (12, 13) included in a plurality of slide (10) packages, in which each of said analysis films (12, 13) has at least one layer containing reagent for assaying a predetermined analyte, comprising the following method steps:
(a) recording on a magnetic card (4) information required for a curve corresponding to an analysis slide (10) having a particular analysis film (12, 13);
(b) reading magnetically said information recorded on said magnetic card (4) before or during assaying the analysis film (12, 13) included in the slide (10) package;
(c) producing a lot-specific standard curve corresponding to the lot-specifity of the analysis films (12, 13) by using said information read;
(d) performing a calculation to obtain the concentration or activity of said analyte;
characterized in that said information on said magnetic card comprises the following two types of information:
(1) fixed information (6) including coefficients for completing a basic standard curve corresponding to an analysis slide (10) having said particular analysis film (12, 13); and
(2) variable information (9) required for correcting a deviation in a measurement which is caused by the possible lot-specific variation of characteristics of analysis films (12, 13) differing from one lot to another lot;
and said production of a lot-specific standard curve comprises the following method steps:
(A) completing a basic standard curve by using said fixed information (6); and
(B) producing said lot-specific standard curve from said basic standard curve by using said variable information (9);
a magnetic card (4) being included in each slide (10) package and said method step of reading being performed for every slide (10) package.

2. A method according to claim 1, characterized by
(a) providing an identification number for each set of fixed information (6);
(b) comparing said identification number of a current magnetic card (4) with the identification number of the set of fixed information (6) read in from the previous magnetic card (4); and
(c) if the identification numbers are the same, reading in and storing only the variable information of the current magnetic card (4).

3. Use of magnetic cards (4) in carrying out the method of claim 1, each said card being included in a respective one of a plurality of slide (10) packages having analysis films (12, 13), said magnetic cards (4) having recorded thereon magnetically readable information required for a curve corresponding to an analysis slide (10) having a particular analysis film (12, 13),
wherein said information on said magnetic card comprises the following two types of information:
(1) fixed information (6) including coefficients for completing a basic standard curve corresponding to an analysis slide (10) having said particular analysis film (12, 13); and
(2) variable information (9) required for correcting a deviation in a measurement which is caused by the possible lot-specific variation of characteristics of analysis films (12, 13) differing from one lot to another lot;
and each of said magnetic cards (4) is used for the slide (10) package in which it is included in order to read the whole of the information (6, 7, 8, 9) or a part of the information (6, 7, 8, 9) including said variable information (9) before or during assaying samples by using the analysis film (12, 13) within the slide (10) package.

## Patentansprüche

1. Verfahren zum Untersuchen von Proben unter Verwendung von Analysefilmen (12, 13), die in einer Mehrzahl von Läufer-bzw. Objektträger (10)-Packungen enthalten sind, worin jeder der Analysefilme (12, 13) wenigstens eine Schicht hat, die ein Reagens zum Untersuchen eines vorbestimmten Analyts enthält, umfassend die folgenden Verfahrensschritte:
(a) Aufzeichnen von Information, die für eine Kurve erforderlich ist, welche einem Analyseläufer bzw. -objektträger (10) entspricht, der einen speziellen Analysefilm (12, 13) hat, auf einer Magnetkarte (4);
(b) magnetisches Lesen der Information, die auf der Magnetkarte (4) aufgezeichnet ist, welche in der Läufer- bzw. Objektträger (10)-Packung enthalten ist, vor oder während des Untersuchens des Analysefilms (12, 13);
(c) Erzeugen einer chargenspezifischen Standardkurve, die einer Chargenspezifität der Analysefilme (12, 13) entspricht, unter Verwendung der gelesenen Information;
(d) Ausführen einer Berechnung, um die Konzentration oder Aktivität des Analyts zu erhalten;
dadurch **gekennzeichnet**, daß die Information auf der Magnetkarte die folgenden beiden Arten von Information enthält:
(1) feste Information (6), die Koeffizienten für das Fertigstellen einer grundlegenden Standardkurve enthält, welche einem Analyseläufer bzw. -objektträger (10) entspricht, der den speziellen Analysefilm (12, 13) hat; und
(2) variable Information (9), die zum Korrigieren einer Abweichung in einer Messung erforderlich ist, welche durch die mögliche chargenspezifische Variation von Charakteristika von Analysefilmen (12, 13), die sich von einer Charge zu einer anderen Charge unterscheiden, verursacht ist;
und wobei die Herstellung einer chargenspezifischen Standardkurve die folgenden Verfahrensschritte umfaßt:
(A) Fertigstellen einer grundlegenden Standardkurve unter Verwendung der festen Information (6); und
(B) Erzeugen der chargenspezifischen Standardkurve aus der grundlegenden Standardkurve unter Verwendung der variablen Information (9);
wobei eine Magnetkarte (4) in jeder Läufer- bzw. Objektträger (10)-Packung enthalten ist und der Verfahrensschritt des Lesens für jede Läufer- bzw. Objektträger (10)-Packung ausgeführt wird.

2. Verfahren gemäß Anspruch 1, **gekennzeichnet** durch
(a) Vorsehen einer Identifikationsnummer für jeden Satz von fester Information (6);
(b) Vergleichen der Identifikationsnummer einer gegenwärtigen Magnetkarte (4) mit der Identifikationsnummer des Satzes von fester Information (6), die von der vorherigen Magnetkarte ausgelesen worden ist; und
(c) Einlesen und Speichern von nur der variablen Information der gegenwärtigen Magnetkarte (4), wenn die Identifikationsnummern die gleichen sind:

3. Verwendung von Magnetkarten (4) beim Ausführen des Verfahrens des Anspruchs 1, wobei jede Karte in einer jeweiligen einen aus einer Mehrzahl von Läufer- bzw. Objektträger (10)-Packungen, die Analysefilme (12, 13) haben, enthalten ist, wobei auf den Magnetkarten (4) magnetisch lesbare Information aufgezeichnet ist, die für eine Kurve erforderlich ist, welche einem Analyseläufer bzw. -objektträger (10) entspricht, der einen speziellen Analysefilm (12, 13) hat,
worin die Information auf der Magnetkarte die folgenden beiden Arten von Information umfaßt:
(1) feste Information (6), die Koeffizienten für das Fertigstellen einer grundlegenden Standardkurve enthält, welche einem Analyseläufer bzw. -objektträger (10) entspricht, der den speziellen Analysefilm (12, 13) hat; und
(2) variable Information (9), die zum Korrigieren einer Abweichung in einer Messung erforderlich ist, welche durch die mögliche chargenspezifische Variation von Charakteristika der Analysefilme (12, 13), die sich von einer Charge zur anderen Charge unterscheiden, verursacht ist;
und wobei jede der Magnetkarten (4) für die Läufer- bzw. Objektträger (10)-Packung verwendet wird, in welcher sie enthalten ist, um die Gesamtheit der Information (6, 7, 8, 9) oder einen Teil der Information (6, 7, 8, 9), die die variable Information (9) enthält, vor oder während des Untersuchens von Proben unter Verwendung des Analysefilms (12, 13) innerhalb der Läufer bzw. Objektträger (10)-Packung zu lesen.

## Revendications

1. Procédé de détermination d'échantillons par utilisation de pellicules d'analyse (12, 13) comprises dans une pluralité d'ensembles de lames (10), où chacune desdites pellicules d'analyse (12, 13) possède au moins une couche contenant un réactif qui sert à déterminer un analyte prédéterminé, le procédé comprenant les opérations suivantes :
(a) enregistrer sur une carte magnétique (4) des informations nécessitées pour une courbe correspondant à une lame d'analyse (10) qui possède une pellicule d'analyse particulière (12, 13);
(b) lire magnétiquement lesdites informations enregistrées sur ladite carte magnétique (4) avant ou pendant la détermination de la pellicule d'analyse (12, 13) comprise dans l'ensemble de lames (10) ;
(c) produire une courbe normalisée spécifique à un lot, qui correspond à la spécificité des pellicules d'analyse (12, 13) vis-à-vis du lot, en utilisant lesdites informations lues ;
(d) effectuer un calcul afin d'obtenir la concentration ou l'activité dudit analyte ;
caractérisé en ce que lesdites informations présentes sur ladite carte magnétique comprennent les deux types d'informations suivants :
(1) des informations fixes (6) comportant des coefficients qui permettent de réaliser une courbe normalisée de base correspondant à une lame d'analyse (10) qui possède ladite pellicule d'analyse particulière (12, 13) ; et
(2) des informations variables (9) nécessitées pour corriger un écart d'une mesure qui est provoqué par une éventuelle variation. spécifique au lot, de caractéristiques de pellicules d'analyse (12, 13) qui diffèrent d'un lot à un autre lot ;
et ladite opération de production d'une courbe normalisée spécifique à un lot comprend les opérations suivantes :
(A) réaliser une courbe normalisée de base en utilisant lesdites informations fixes (6) ; et
(B) produire ladite courbe normalisée spécifique à un lot à partir de ladite courbe normalisée de base en utilisant lesdites informations variables (9) ;
une carte magnétique (4) étant comprise dans chaque ensemble de lames (10), et ledit procédé de lecture étant effectué pour chaque ensemble de lames (10).

2. Procédé selon la revendication 1, caractérisé par les opérations suivantes :
(a) fournir un numéro d'identification pour chaque groupe d'informations fixes (6) ;
(b) comparer ledit numéro d'identification d'une carte magnétique (4) en cours d'utilisation avec le numéro d'identification du groupe d'informations fixes (6) lu sur la carte magnétique (4) précédente ; et
(c) si les numéros d'identification sont les mêmes, ne lire et stocker que les informations variables de la carte magnétique (4) courante.

3. Utilisation de cartes magnétiques (4) pour la mise en oeuvre du procédé de la revendication 1, chaque dite carte étant comprise dans un ensemble respectif d'une pluralité d'ensemble de lames (10) possédant des pellicules d'analyse (12, 13), lesdites cartes magnétiques (4) portant des informations enregistrées, qui peuvent être lues magnétiquement, nécessitées pour une courbe correspondant à une lame d'analyse (10) qui possède une pellicule d'analyse particulière (12, 13),
où lesdites informations présentes sur ladite carte magnétique comprennent les deux types d'informations suivants :
(1) des informations fixes (6) comportant des coefficients qui permettent de réaliser une courbe normalisée de base correspondant à une lame d'analyse (10) qui possède ladite pellicule d'analyse (12, 13) ;
(2) des informations variables (9) nécessitées pour corriger un écart d'une mesure qui est provoqué par une éventuelle variation, spécifique à un lot, de caractéristiques de pellicules d'analyse (12, 13) qui diffèrent d'un lot à un autre lot ;
et chacune desdites cartes magnétiques (4) est utilisée pour l'ensemble de lames (10) dans lequel elle est comprise afin de lire la totalité des informations (6, 7, 8, 9) ou une partie des informations (6, 7, 8, 9), qui comprennent lesdites informations variables (9), avant ou pendant la détermination d'échantillons au moyen de la pellicule d'analyse (12, 13) se trouvant à l'intérieur de l'ensemble de lames (10).
